# EUROPÄISCHE PATENTSCHRIFT

(11) **EP 2 261 082 B1**
(45) Veröffentlichungstag und Bekanntmachung des Hinweises auf die Patenterteilung: **01.08.2018**
(21) Anmeldenummer: 09161916.3
(22) Anmeldetag: 04.06.2009
(51) Int. Cl.: B60Q 1/30, B60Q 1/32

(54) **Nutzfahrzeug mit einer Konturmarkierung**
Commercial vehicle with a contour marking
Véhicule utilitaire doté d'un marquage de contour

(43) Veröffentlichungstag der Anmeldung: 15.12.2010
(73) Patentinhaber: Schmitz Cargobull AG, 48341 Altenberge (DE)
(72) Erfinder: Gerling, Manfred, 48683 Ahaus (DE)
(74) Vertreter: Cohausz & Florack

(56) Entgegenhaltungen:
- EP-A- 1 512 578
- WO-A-02/04857
- DE-A1- 19 529 884
- GB-A- 1 128 730
- US-A- 4 839 776
- US-A1- 2003 002 292
- US-A1- 2006 083 012

## Beschreibung

Die Erfindung betrifft ein Nutzfahrzeug, insbesondere Lastkraftwagen, Anhänger oder Sattelauflieger, mit einem Aufbau in Form eines Planenaufbaus oder Kofferaufbaus, wobei der Aufbau eine eine Mehrzahl von in einer Reihe angeordneten Leuchten umfassende, elektrische Beleuchtungseinrichtung zur aktiven Konturmarkierung des Nutzfahrzeugs aufweist und wobei die Leuchten an einer Seitenwand, einer Rückwand und/oder einer Stirnwand des Aufbaus des Nutzfahrzeugs angeordnet sind. Nutzfahrzeuge der bekannten Art weisen nicht nur die allgemein von Kraftfahrzeugen bekannten Scheinwerfer und Rückfahrleuchten, sondern zusätzlich sogenannte Konturmarkierungen auf. Die Konturmarkierung erlaubt es den Verkehrsteilnehmern, größere Nutzfahrzeuge auch bei Dunkelheit leichter zu erkennen. Zur aktiven Konturmarkierung wird typischerweise eine elektrische Beleuchtungseinrichtung mit einer Reihe von voneinander beabstandeten Leuchten vorgesehen.

Vermehrt kommen zudem zusätzlich auch flächige retroreflektierende Mittel zur passiven Konturmarkierung zum Einsatz. Diese erzeugen im Gegensatz zu den Beleuchtungseinrichtungen kein Licht, sondern reflektieren lediglich von außen auf die retroreflektierenden Mittel auftreffendes Licht. Wie die Leuchten zur aktiven Konturmarkierung sind auch die retroreflektierenden Mittel meist entlang von Rändern des Nutzfahrzeugs bzw. dessen Aufbaus vorgesehen.

Um sowohl passive als auch aktive Konturmarkierungen an einem Nutzfahrzeug anbringen zu können, müssen hierfür geeignete und ausreichend groß bemessene Flächen vorhanden sein. Dies ist nicht immer der Fall oder geht zu Lasten von Werbeflächen sowie anderen Kennzeichnungen oder Bauelementen des Nutzfahrzeugs.

Ein gattungsgemäßes Nutzfahrzeug ist aus US 4,839,776 A bekannt. Der vorliegenden Erfindung liegt daher die Aufgabe zugrunde, das eingangs genannte und zuvor näher beschriebene Nutzfahrzeug derart auszugestalten und weiterzubilden, dass auch bei beengten Platzverhältnissen sowohl eine aktive als auch eine passive Konturmarkierung in geeigneter Weise erfolgen kann.

Diese Aufgabe ist bei einem Nutzfahrzeug der eingangs genannten Art mit den Merkmalen des Oberbegriffs von Anspruch 1 dadurch gelöst, dass wenigstens ein flächiges, der in einer Reihe angeordneten Mehrzahl von Leuchten zugeordnetes retroreflektierendes Mittel zur passiven Konturmarkierung des Nutzfahrzeugs an der Seitenwand, der Rückwand und/oder der Stirnwand des Aufbaus vorgesehen ist, wobei das retroreflektierende Mittel streifenförmig und teiltransparent ausgebildet ist und wobei das retroreflektierende Mittel zur Hinterleuchtung die Mehrzahl der in einer Reihe angeordneten Leuchten jeweils wenigstens teilweise überdeckend angeordnet ist. Erfindungsgemäß wird also von einer räumlichen Trennung des retroreflektierenden Mittels zur passiven Konturmarkierung und der elektrischen Beleuchtungseinrichtung zur aktiven Konturmarkierung des Nutzfahrzeugs Abstand genommen. Das retroreflektierende Mittel wird stattdessen teiltransparent ausgebildet und im Strahlengang des von der wenigstens einen Leuchte der Beleuchtungseinrichtung abgestrahlten Lichts angeordnet. Somit wird das retroreflektierende Mittel hinterleuchtet, wobei das von der wenigstens einen Leuchte abgestrahlte Licht jedenfalls teilweise durch das retroreflektierende Mittel hindurchtritt. Dabei ist es unschädlich, wenn das retroreflektierende Mittel einen Teil des Lichts absorbiert oder reflektiert, solange die Intensität des durchscheinenden Licht für eine aktive Konturmarkierung des Nutzfahrzeugs ausreichend ist.

Es muss mit anderen Worten das von der wenigstens einen Leuchte ausgehende Licht nicht vollständig durch das retroreflektierende Mittel hindurchscheinen. Es reicht aus, wenn mit Hilfe der durchscheinenden Lichtmenge eine aktive Konturmarkierung des Nutzfahrzeugs möglich ist und diese von Verkehrsteilnehmern auch als solche erkannt wird. Dies kann beispielsweise dadurch sichergestellt werden, dass das retroreflektierende Mittel die wenigstens eine Leuchte nicht vollständig, sondern nur bereichsweise überdeckend angeordnet ist. Erfindungsgemäß ist die wenigstens eine Leuchte und das retroreflektierende Mittel an wenigstens einer Seitenwand, einer Rückwand und/oder einer Stirnwand eines Aufbaus des Nutzfahrzeugs angeordnet. So kann die Kontur des Nutzfahrzeugs effektiv markiert werden.

Bei dem Aufbau des Nutzfahrzeugs handelt es beispielsweise sich um einen Kofferaufbau, der aus einzelnen, vormontierten, eine Seitenwand, eine Rückwand, eine Stirnwand oder ein Dach bildenden Paneelen zusammengefügt wird. Die Kontur von Kofferaufbauten kann mit besonders geringem Aufwand markiert werden.

Alternativ kann es sich aber auch um einen Planenaufbau handeln, bei dem der Laderaum durch flexible Planen anstatt starrer Paneele nach außen abgeschlossen ist. Da die äußere Oberfläche entsprechender Aufbauten hauptsächlich durch Planen gebildet wird, existiert für eine effiziente Konturmarkierung nur wenig Platz.

Zwecks einer einfacheren Montage kann die wenigstens eine Leuchte, bedarfsweise auch die Beleuchtungseinrichtung als solche, ein integraler Bestandteil der wenigstens einen Seitenwand, der Rückwand und/oder der Stirnwand des Aufbaus sein. Mit anderen Worten stellt die Leuchte bzw. die Beleuchtungseinrichtung einen Teil der Seitenwand, Rückwand und/oder Stirnwand selbst dar, anstatt an der Seitenwand, Rückwand und/oder Stirnwand lediglich als Anbauteil befestigt zu sein. Insbesondere ist die Leuchte bzw. die Beleuchtungseinrichtung bereits vor dem Zusammenbau des Aufbaus an wenigstens einem der genannten Wände verbaut. Eine nachträgliche Montage der Leuchte bzw. der Beleuchtungseinrichtung ist dann nicht mehr erforderlich. Dies bietet sich insbesondere bei Kofferaufbauten an und verringert den Montageaufwand und die Montagekosten.

Das wenigstens eine retroreflektierende Mittel kann wenigstens bereichsweise auf einem teiltransparenten Gehäuseelement der wenigstens einen Leuchte angebracht sein, um den Montageaufwand hinsichtlich des retroreflektierenden Mittels gering zu halten. Insbesondere ist auf diese Weise eine Konfektionierung der Leuchte vor ihrem eigentlichen Einbau möglich. Bei dem teiltransparenten Gehäuseelement handelt es sich dabei insbesondere um das Gehäuseelement, durch das das von der Leuchte erzeugte Licht nach außen abgestrahlt wird. Das Anbringen des retroreflektierenden Mittels erfolgt in einfacher Weise durch Aufkleben auf das teiltransparente Gehäuseelement.

Damit trotz des retroreflektierenden Mittels noch genügend Licht nach außen abgestrahlt wird, kann das retroreflektierende Mittel die wenigstens eine Leuchte und/oder das teiltransparente Gehäuseelement nur bereichsweise überdeckend angeordnet sein. Zur Verbesserung der passiven Konturmarkierung ist es jedoch bevorzugt, wenn das wenigstens eine retroreflektierende Mittel die wenigstens eine Leuchte und/oder das teiltransparente Gehäuseelement im Wesentlichen vollflächig überdeckend angeordnet wird.

Wenn zur aktiven Konturmarkierung eine Mehrzahl von Leuchten vorgesehen ist, die mehr oder weniger regelmäßig voneinander beabstandet sein können, kann zusätzlich vorgesehen sein, dass ebenfalls eine Mehrzahl von jeweils einer Leuchte zugeordneten retroreflektierenden Mitteln vorgesehen ist. Die aktive und die passive Konturmarkierung unterscheiden sich in diesem Fall besonders wenig und die passive Konturmarkierung kann über die Leuchten einfach montiert werden. Das wenigstens eine retroreflektierende Mittel ist streifenförmig ausgebildet und einer Mehrzahl von in einer Reihe angeordneten Leuchten zugeordnet. Dadurch wird die Montage erleichtert, da das retroreflektierende Mittel als Streifen in einem einzigen Montageschritt über eine beachtliche Länge vorgesehen und dabei einer Reihe von Leuchten zugeordnet werden kann. Das retroreflektierende Mittel wird dabei wenigstens teilweise über eine ganze Reihe von separaten Leuchten angebracht, wobei es sich der Einfachheit halber besonders anbietet, das retroreflektierende Mittel zu verkleben. Die Mehrzahl von Leuchten ist dabei vorzugsweise entlang einer Geraden angeordnet, wodurch die Montage weiter vereinfacht wird.

Um die Konturmarkierung des Nutzfahrzeugs weiter zu verbessern, kann die Mehrzahl von Leuchten sich im Wesentlichen über die gesamte Länge und/oder Höhe der Seitenwand, der Rückwand und/oder der Stirnwand des Aufbaus erstrecken und bedarfsweise regelmäßig voneinander beabstandet sein.

Insbesondere ist die Mehrzahl von Leuchten im Wesentlichen entlang eines unteren und/oder oberen Randes der Seitenwand, der Rückwand und/oder der Stirnwand des Aufbaus angeordnet. Dort sind die Leuchten für andere Verkehrsteilnehmer leicht erkennbar.

Um den Reflexionsgrad zu erhöhen, kann das wenigstens eine retroreflektierende Mittel eine Vielzahl von prismatischen Elementen aufweisen.

Das retroreflektierende Mittel kann leicht angebracht werden, wenn es als eine retroreflektierende Folie ausgebildet ist.

Eine hohe Flexibilität hinsichtlich unterschiedlicher Anforderungen an die Nutzfahrzeuge kann dadurch sichergestellt werden, dass die wenigstens eine Leuchte wenigstens ein LED-Leuchtmittel aufweist.

Die Erfindung wird nachfolgend anhand einer lediglich Ausführungsbeispiele darstellenden Zeichnung näher erläutert. Die Zeichnung zeigt:
- Fig. 1: ein Ausführungsbeispiel eines erfindungsgemäßen Nutzfahrzeugs,
- Fig. 2: ein Detail des Nutzfahrzeugs aus Fig. 1 im Bereich einer Leuchte der elektrischen Beleuchtungseinrichtung,
- Fig. 3: ein Ausführungsbeispiel des erfindungsgemäßen Nutzfahrzeugs in einer perspektivischen Ansicht und
- Fig. 4: ein Detail des Nutzfahrzeugs aus Fig. 3 im Bereich einer Leuchte der elektrischen Beleuchtungseinrichtung.

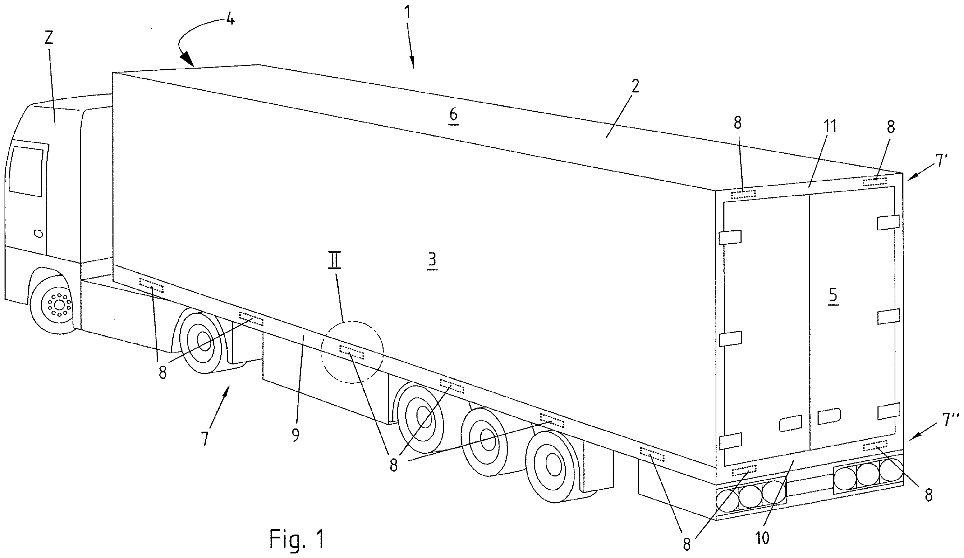

In Fig. 1 ist ein nicht erfindungsgemäßes Nutzfahrzeug 1 in einer perspektivischen Ansicht dargestellt, das als Sattelauflieger ausgebildet und an eine Zugmaschine Z angekoppelt ist. Das Nutzfahrzeug 1 weist einen Kofferaufbau 2 mit zwei Seitenwänden 3, einer Stirnwand 4, einer Rückwand 5 und einem Dach 6 auf. Als integraler Bestandteil sowohl der Seitenwände 3 als auch der Rückwand 5 des Kofferaufbaus 2 sind elektrische Beleuchtungseinrichtungen 7,7',7" vorgesehen, die jeweils eine Mehrzahl von im dargestellten Ausführungsbeispiel identisch ausgebildeten, separaten Leuchten 8 umfassen. Angeordnet sind die Leuchten 8 sowohl an den unteren Rändern 9,10 der Seitenwände 3 und der Rückwand 5 sowie an dem oberen Rand 11 der Rückwand 5 in mehr oder weniger regelmäßigen Abständen.

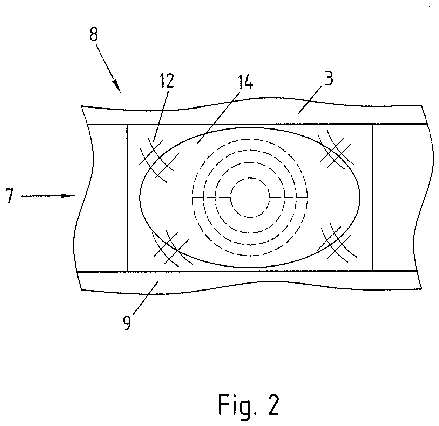

In der Fig. 2 ist ein Detail des Nutzfahrzeugs 1 im Bereich einer Leuchte 8 des unteren Rands 9 der Seitenwand 3 dargestellt. Bei den Leuchtmitteln der Leuchten 8 handelt es sich im dargestellten Ausführungsbeispiel um Leuchtdioden (LED). Die Leuchten 8 weisen ein äußeres, teiltransparentes Gehäuseelement 12 auf, durch das das von jeweiligen Leuchtmitteln erzeugte Licht nach außen abgestrahlt wird. Jedes transparente Gehäuseelement 12 und damit jede Leuchte 8 der elektrischen Beleuchtungseinrichtungen 7,7',7" weist an seiner Außenseite ein flächiges retroreflektierendes Mittel 14 in Form einer Folie auf. Die Folie ist mit einer selbstklebenden Schicht versehen und auf das teiltransparente Gehäuseelement 12 der Leuchte 8 aufgeklebt.

In einem Zustand, in dem die elektrische Beleuchtungseinrichtungen 7,7',7" ausgeschaltet und das Nutzfahrzeug 1 angestrahlt wird, reflektieren die retroreflektierenden Mittel 14 auf den einzelnen Leuchten 8 der Beleuchtungseinrichtungen 7,7',7" einen Teil des einfallenden Lichts und markieren auf diese Weise die Kontur des Nutzfahrzeugs 1. Sind die Beleuchtungseinrichtungen 7,7',7" dagegen eingeschaltet, wird die Kontur des Nutzfahrzeugs 1 aktiv markiert, indem das von den Leuchten 8 der Beleuchtungseinrichtungen 7,7',7" abgestrahlte Licht jedenfalls teilweise durch die auf die Leuchten 8 aufgeklebten retroreflektierenden Mittel 14 hindurchstrahlt.

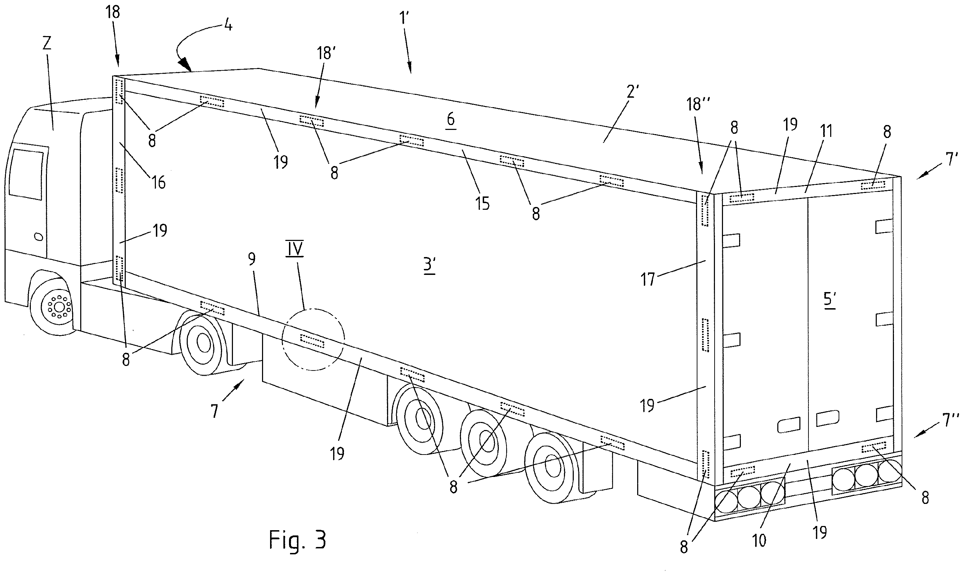

Das in der Fig. 3 dargestellte Nutzfahrzeug 1' ist im Wesentlichen mit dem in der Fig. 1 dargestellten Nutzfahrzeug 1 identisch. Daher werden für gleiche Bauteile dieselben Bezugszeichen verwendet. Allerdings sind bei dem in Fig. 3 dargestellten Nutzfahrzeug 1' auch entlang der oberen, der vorderen und der hinteren Ränder 15,16,17 der Seitenwände 3' elektrische Beleuchtungseinrichtungen 18,18',18" angeordnet. Die retroreflektierenden Mittel 19 zur passiven Konturmarkierung sind streifenförmig ausgebildet und jeweils über eine Mehrzahl von Leuchten 8 angeordnet.

Im dargestellten Ausführungsbeispiel erstreckt sich jeweils ein retroreflektierendes Mittel 19 in Form eines Folienstreifens entlang der im Wesentlichen gesamten oberen bzw. unteren Ränder 9,10,11,15 der Seitenwand 3' und der Rückwand 5'. Zudem erstreckt sich jeweils ein retroreflektierendes Mittel 19 entlang des vorderen bzw. hinteren Randes 16,17 jeder Seitenwand 3'. Jedes dieser retroreflektierenden Mittel 19 erstreckt sich dabei über die an dem entsprechenden Rand 9,10,11,15,16,17 vorgesehenen Leuchten 8 der elektrischen Beleuchtungseinrichtungen 7,7',7",18,18',18". Die Leuchten 8 jeder Beleuchtungseinrichtung 7,7',7",18,18',18", sind im Wesentlichen entlang einer Geraden angeordnet.

Es ist jedoch nicht erforderlich, dass jedem Rand und/oder jedem streifenförmigen retroreflektierenden Mittel eine separate Beleuchtungseinrichtung zugeordnet ist. Alternativ wäre es denkbar, dass eine einzige Beleuchtungseinrichtung Leuchten umfasst, die unterschiedlichen Rändern und/oder unterschiedlichen streifenförmigen retroreflektierenden Mitteln zugeordnet sind. Beispielsweise können alle Leuchten einer Wand des Kofferaufbaus oder auch eines anderen Aufbaus einer einzigen Beleuchtungseinrichtung zugeordnet sein. Die Zuordnung der Leuchten, insbesondere einer Wand des Aufbaus, zu bestimmten Beleuchtungseinrichtungen ist grundsätzlich von eher untergeordneter Bedeutung.

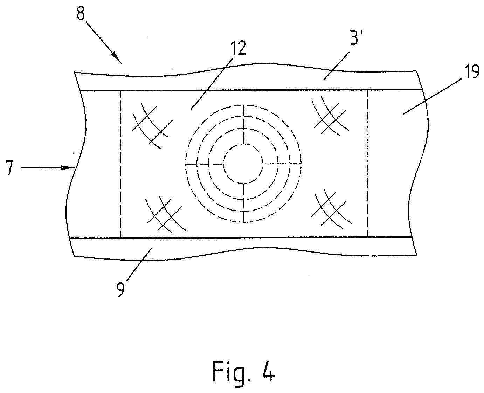

In der Fig. 4 ist die Seitenwand 3' im Bereich einer Leuchte 8 einer der Beleuchtungseinrichtungen 7 dargestellt. Das teiltransparente Gehäuseelement 12 der Leuchte 8 ist dabei von dem streifenförmigen retroreflektierenden Mittel 19 vollständig überdeckt und damit im aktivierten Zustand der Beleuchtungseinrichtung 7 entsprechend hinterleuchtet.

## Patentansprüche

1. Nutzfahrzeug (1,1'), insbesondere Lastkraftwagen, Anhänger oder Sattelauflieger, mit einem Aufbau in Form eines Planenaufbaus oder Kofferaufbaus, wobei der Aufbau eine eine Mehrzahl von in einer Reihe angeordneten Leuchten (8) umfassende, elektrische Beleuchtungseinrichtung (7,7',7",18,18',18") zur aktiven Konturmarkierung des Nutzfahrzeugs (1) aufweist und wobei die Leuchten (8) an einer Seitenwand (3,3'), einer Rückwand (5,5') und/oder einer Stirnwand (4) des Aufbaus des Nutzfahrzeugs (1,1') angeordnet sind,
**dadurch gekennzeichnet, dass** wenigstens ein flächiges, der in einer Reihe angeordneten Mehrzahl von Leuchten (8) zugeordnetes retroreflektierendes Mittel (19) zur passiven Konturmarkierung des Nutzfahrzeugs (1,1') an der Seitenwand (3,3'), der Rückwand (5,5') und/oder der Stirnwand (4) des Aufbaus vorgesehen ist, wobei das retroreflektierende Mittel (19) streifenförmig und teiltransparent ausgebildet ist und wobei das retroreflektierende Mittel (19) zur Hinterleuchtung die Mehrzahl der in einer Reihe angeordneten Leuchten (8) jeweils wenigstens teilweise überdeckend angeordnet ist.

2. Nutzfahrzeug nach Anspruch 1,
**dadurch gekennzeichnet, dass** die Beleuchtungseinrichtung (7,7',7",18,18',18") ein integraler Bestandteil der Seitenwand (3,3'), der Rückwand (5,5') und/oder der Stirnwand (4) des Aufbaus ist.

3. Nutzfahrzeug nach Anspruch 1 oder 2,
**dadurch gekennzeichnet, dass** das retroreflektierende Mittel (14,19) wenigstens bereichsweise auf einem teiltransparenten Gehäuseelement (12) der wenigstens einen Leuchte (8) angebracht, vorzugsweise aufgeklebt, ist.

4. Nutzfahrzeug nach einem der Ansprüche 1 bis 3,
**dadurch gekennzeichnet, dass** das retroreflektierende Mittel (14,19) zur Hinterleuchtung die wenigstens eine Leuchte (8) und/oder deren teiltransparentes Gehäuseelements (12) im Wesentlichen vollflächig überdeckend angeordnet ist.

5. Nutzfahrzeug nach einem der Ansprüche 1 bis 4,
**dadurch gekennzeichnet, dass** eine Mehrzahl von Leuchten (8) und eine Mehrzahl von jeweils einer Leuchte (8) zugeordneten retroreflektierenden Mitteln (14) vorgesehen sind.

6. Nutzfahrzeug nach Anspruch 1 oder 5,
**dadurch gekennzeichnet, dass** sich die Mehrzahl von in einer Reihe angeordneten Leuchten (8) sich im Wesentlichen über die gesamte Länge und/oder Höhe der Seitenwand (3,3'), der Rückwand (5,5') und/oder der Stirnwand (4) des Aufbaus erstrecken.

7. Nutzfahrzeug nach einem der Ansprüche 1 oder 5,
**dadurch gekennzeichnet, dass** die Mehrzahl von in einer Reihe angeordneten Leuchten (8) im Wesentlichen entlang eines unteren und/oder oberen Randes (9,10,11,15) der Seitenwand (3,3'), der Rückwand (5,5') und/oder der Stirnwand (4) des Aufbaus vorgesehen sind.

8. Nutzfahrzeug nach einem der Ansprüche 1 bis 7,
**dadurch gekennzeichnet, dass** das retroreflektierende Mittel (14,19) eine Vielzahl prismatischer Elemente aufweist.

9. Nutzfahrzeug nach einem der Ansprüche 1 bis 8,
**dadurch gekennzeichnet, dass** das retroreflektierende Mittel (14,19) eine retroreflektierende Folie ist.

10. Nutzfahrzeug nach einem der Ansprüche 1 bis 9,
**dadurch gekennzeichnet, dass** die wenigstens eine Leuchte (8) wenigstens ein LED-Leuchtmittel aufweist.

## Claims

1. Commercial vehicle (1 1'), in particular heavy goods vehicle, trailer or semi-trailer, having a body in the form of a tarpaulin body or box body, wherein the body has an electrical illumination device (7, 7', 7", 18, 18', 18") comprising a plurality of lamps (8) arranged in a row for active contour marking of the commercial vehicle (1) and wherein the lamps (8) are arranged on a side wall (3, 3'), a rear wall (5, 5') and/or a front wall (4) of the body of the commercial vehicle (1, 1'),
**characterised in that**
at least one flat, retroreflective means (19) allocated to the plurality of lamps (8) arranged in a row is provided on the side wall (3, 3'), the rear wall (5, 5') and/or the front wall (4) of the body for passive contour marking of the commercial vehicle (1, 1'), wherein the retroreflective means (19) is formed in strips and to be partially transparent and wherein the retroreflective means (19) is arranged to at least partially cover the plurality of lamps (8) arranged in a row respectively for backlighting.

2. Commercial vehicle according to Claim 1,
**characterised in that**
the illumination device (7, 7', 7", 18, 18', 18") is an integral component of the side wall (3, 3'), the rear wall (5, 5') and/or the front wall (4) of the body.

3. Commercial vehicle according to Claim 1 or 2,
**characterised in that**
the retroreflective means (14, 19) is attached, preferably affixed, at least in regions to a partially transparent housing element (12) of the at least one lamp (8).

4. Commercial vehicle according to any one of Claims 1 to 3,
**characterised in that**
the retroreflective means (14, 19) is arranged to substantially completely cover the at least one lamp (8) and/or the partially transparent housing element (12) thereof for backlighting.

5. Commercial vehicle according to any one of Claims 1 to 4,
**characterised in that**
a plurality of lamps (8) and a plurality of retroreflective means (14) allocated to one lamp (8) respectively are provided.

6. Commercial vehicle according to Claim 1 or 5,
**characterised in that**
the plurality of lamps (8) arranged in a row extend substantially over the entire length and/or height of the side wall (3, 3'), the rear wall (5, 5') and/or the front wall (4) of the body.

7. Commercial vehicle according to any one of Claims 1 or 5,
**characterised in that**
the plurality of lamps (8) arranged in a row are provided substantially along a lower and/or upper edge (9, 10, 11, 15) of the side wall (3, 3'), the rear wall (5, 5') and/or the front wall (4) of the body.

8. Commercial vehicle according to any one of Claims 1 to 7,
**characterised in that**
the retroreflective means (14, 19) has a plurality of prismatic elements.

9. Commercial vehicle according to any one of Claims 1 to 8,
**characterised in that**
the retroreflective means (14, 19) is a retroreflective film.

10. Commercial vehicle according to any one of Claims 1 to 9,
**characterised in that**
the at least one lamp (8) has at least one LED light source.

## Revendications

1. Véhicule utilitaire (1, 1'), en particulier un poids lourd, remorque ou semi-remorque, avec une structure en forme d'une structure à bâche ou d'une structure coffre, où la structure présente un dispositif d'éclairage électrique (7, 7', 7", 18, 18', 18"), comportant une multitude de lampes (8) agencées en une rangée, destiné au marquage du contour actif du véhicule utilitaire (1) et où les lampes (8) sont agencées sur une paroi latérale (3, 3'), une paroi arrière (5, 5') et/ou une paroi frontale (4) de la structure du véhicule utilitaire (1, 1'),
**caractérisé en ce que**
l'on prévoit au moins un moyen rétro-réflecteur plat (19), associé à la multitude de lampes (8) agencées en une rangée, destiné au marquage du contour passif du véhicule utilitaire (1, 1'), sur la paroi latérale (3, 3'), la paroi arrière (5, 5') et/ou la paroi frontale (4) de la structure, où le moyen rétro-réflecteur (19) est conçu en forme de bande et partiellement transparent et où le moyen rétro-réflecteur (19) pour le rétro-éclairage de la multitude de lampes (8) agencées en une rangée est agencé respectivement au moins partiellement en recouvrement.

2. Véhicule utilitaire selon la revendication 1,
**caractérisé en ce que**
le dispositif d'éclairage (7, 7', 7", 18, 18', 18") est une partie intégrante de la paroi latérale (3, 3'), la paroi arrière (5, 5') et/ou la paroi frontale (4) de la structure.

3. Véhicule utilitaire selon la revendication 1 ou 2,
**caractérisé en ce que**
le moyen rétro-réflecteur (14, 19) est appliqué, de préférence est collé, au moins partiellement, sur un élément de logement partiellement transparent (12) d'au moins une lampe (8).

4. Véhicule utilitaire selon l'une des revendications 1 à 3,
**caractérisé en ce que**
le moyen rétro-réflecteur (14, 19) pour le rétro-éclairage d'au moins une lampe (8) et/ou de son élément de logement partiellement transparent (12) est agencé essentiellement en recouvrement sur toute la surface.

5. Véhicule utilitaire selon l'une des revendications 1 à 4,
**caractérisé en ce que**
l'on prévoit une multitude de lampes (8) et une multitude de moyens rétro-réflecteurs (14) associés respectivement à une lampe (8).

6. Véhicule utilitaire selon la revendication 1 ou 5,
**caractérisé en ce que**
la multitude de lampes (8) agencées en une rangée s'étendent essentiellement l'ensemble de la longueur et/ou de l'hauteur de la paroi latérale (3, 3'), de la paroi arrière (5, 5') et/ou de la paroi frontale (4) de la structure.

7. Véhicule utilitaire selon l'une des revendications 1 ou 5,
**caractérisé en ce que**
l'on prévoit la multitude de lampes (8) agencées en une rangée essentiellement le long d'un bord inférieur et/ou supérieur (9, 10, 11, 15) de la paroi latérale (3, 3'), la paroi arrière (5, 5') et/ou la paroi frontale (4) de la structure.

8. Véhicule utilitaire selon l'une des revendications 1 à 7,
**caractérisé en ce que**
le moyen rétro-réflecteur (14, 19) présente plusieurs éléments prismatiques.

9. Véhicule utilitaire selon l'une des revendications 1 à 8,
**caractérisé en ce que**
le moyen rétro-réflecteur (14,19) est une feuille rétro-réfléchissante.

10. Véhicule utilitaire selon l'une des revendications 1 à 9,
**caractérisé en ce que**
la au moins une lampe (8) présente au moins une source lumineuse DEL.
